# EUROPÄISCHE PATENTANMELDUNG

(11) **EP 4 272 527 A1**
(43) Veröffentlichungstag der Anmeldung: **08.11.2023**
(21) Anmeldenummer: 23170442.0
(22) Anmeldetag: 27.04.2023
(51) Int. Cl.: A01B 63/22

(54) **ANBAUGERÄT ZUR FELDBEARBEITUNG**

(30) Priorität: 28.04.2022 DE 102022110404
(71) Anmelder: Maschinenfabrik Bernard Krone GmbH & Co. KG, 48480 Spelle (DE)
(72) Erfinder: BÜCHTER, STEVEN, 49509 Recke (DE); Bolsmann, Martin, 49832 Andervenne (DE); Buddendick, Michael, 49976 Ahaus (DE)

(57) **Zusammenfassung**

Die Erfindung betrifft ein Anbaugerät (1) zur Feldbearbeitung, welches dazu eingerichtet ist, in einem Arbeitsmodus an eine Landmaschine gekoppelt und von dieser gestützt zu sein und in einem Transportmodus von einem Schlepper gezogen zu werden, aufweisend einen Rahmen (2), der im Arbeitsmodus wenigstens indirekt an die Landmaschine gekoppelt ist, sowie ein mit dem Rahmen (2) verbundenes Fahrwerk (10) mit einem Aufhängungsteil (11) und wenigstens einem hieran gelagerten Laufrad (15), wobei das Fahrwerk (10) durch wenigstens einen Aktor (24, 30, 40) verstellbar ist zwischen einer dem Transportmodus entsprechenden Transportposition, in der es wenigstens teilweise vertikal unter dem Rahmen (2) angeordnet ist, um diesen zu stützen, und einer dem Arbeitsmodus entsprechenden Arbeitsposition, in der es gegenüber der Transportposition wenigstens überwiegend vertikal aufwärts sowie horizontal seitwärts verlagert ist. Um den Einsatz und Transport eines Anbaugeräts für eine Landmaschine zu vereinfachen, ist erfindungsgemäß vorgesehen, dass das Aufhängungsteil (11) durch einen Verstellmechanismus (18) derart mit dem Rahmen (2) verbunden ist, dass das Fahrwerk (10) mittels einer Kombination aus einer wenigstens anteilig translatorisch erfolgenden Primärbewegung und einer rotatorisch um eine Schwenkachse (S) erfolgenden Sekundärbewegung des Aufhängungsteils (11) gegenüber dem Rahmen (2) zwischen der Transportposition und der Arbeitsposition verstellbar ist.

## Beschreibung

Die vorliegende Erfindung betrifft ein Anbaugerät zur Feldbearbeitung nach dem Oberbegriff von Anspruch 1.

In der Landwirtschaft werden zur Bearbeitung eines Feldes unterschiedliche Maschinen eingesetzt. Hierzu zählen z.B. selbstfahrende Maschinen, die einen eigenen Fahrantrieb aufweisen sowie eine integrierte Vorrichtung zur Feldbearbeitung, oder gezogene Maschinen, die keinen eigenen Fahrantrieb aufweisen, sondern von einem Traktor bzw. Schlepper gezogen werden. Außerdem existieren Vorsatz- bzw. Anbaugeräte, die für einen bestimmten Einsatz an eine Landmaschine wie einen Traktor, einen Mähdrescher oder dergleichen angekoppelt werden, wobei die Landmaschine das Anbaugerät wenigstens teilweise, normalerweise vollständig, stützt bzw. trägt. D.h. das Anbaugerät ruht in der Regel im Einsatz nicht oder nur teilweise auf einem eigenen Fahrwerk.

Viele Anbaugeräte sind aufgrund ihrer Breite in angekoppeltem Zustand nicht für den Straßenverkehr zugelassen. Das Anbaugerät muss in diesem Fall abgekoppelt und auf einen eigens vorgesehenen Transportwagen geladen werden. Letzterer weist eine Deichsel auf, durch die er von einem Schlepper gezogen werden kann. Normalerweise ist das Anbaugerät auf dem Transportwagen um 90° gegenüber seiner Position bei der Feldbearbeitung gedreht, wodurch das Breitenproblem gelöst ist. Der Einsatz eines Transportwagens bringt allerdings verschiedene Nachteile mit sich. Hierzu zählen die Anschaffungskosten für einen Wagen, dem lediglich eine Hilfsfunktion zukommt. Außerdem muss der Wagen bei jedem Einsatz auf einem geeigneten Platz in Feldnähe abgestellt werden, was aufgrund der u.U. erheblichen Dimensionen problematisch ist. Außerdem muss das Anbaugerät bei jedem Einsatz vom Transportwagen abgeladen und nach dem Einsatz wieder auf diesen aufgeladen werden, was ein hohes Maß an Präzision erfordert und somit zeitaufwendig ist. Alternativ zum Einsatz eines Transportwagens können manche Anbaugeräte auch für die Straßenfahrt an der Landmaschine verbleiben, wobei wenigstens Teile des Anbaugeräts in eine spezielle Position geschwenkt werden müssen. Auch dies ist allerdings mit Nachteilen verbunden Das Gewicht des Anbaugeräts lastet auf der Landmaschine, so dass u.U. eine zusätzliche Achse notwendig ist, um die Achslast zu begrenzen. Auch ist der Schwenkmechanismus technisch aufwendig und das geschwenkte Anbaugerät schränkt das Sichtfeld des Fahrers ein, insbesondere wenn es an der Vorderseite der Landmaschine angekoppelt ist.

Aus der EP 2 322 024 A1 ist ein Transportsystem für einen Erntevorsatz einer Landmaschine bekannt, mit einem Rahmen, mit dem zwei Räder auf gegenüberliegenden Seiten verbunden sind. Bezogen auf den angekoppelten Zustand an der Landmaschine ist ein erstes Rad vor dem Rahmen angeordnet und über einen ersten Schwenkarm aufgehängt, so dass es um eine in Fahrzeugquerrichtung verlaufende Schwenkachse unter dem Rahmen herum auf die hintere Seite geschwenkt werden kann. Ein zweites Rad ist hinter dem Rahmen angeordnet und über einen zweiten Schwenkarm aufgehängt, so dass es um eine ungefähr in Längsrichtung verlaufende Schwenkachse aufwärts geschwenkt werden kann.

Die EP 2 939 519 B1 zeigt einen Transportwagen für einen Erntevorsatz einer Landmaschine. Dabei ist an einem Rahmen ein Laufrad über zwei Schwenkarme aufgehängt, die um versetzte, in Fahrzeugquerrichtung verlaufende Schwenkachsen schwenkbar sind, wodurch das Laufrad von einer Vorderseite des Rahmens auf eine Hinterseite geschwenkt werden kann.

Die EP 2 656 715 B1 offenbart eine gezogene Erntemaschine. Dabei ist ein Schneidwerk vorne an einem Rahmen befestigt, und die Erntemaschine kann mittels einer Deichsel gezogen werden, die sich in einer Feldposition in Längsrichtung nach vorne erstreckt und in eine Transportanordnung geschwenkt werden kann, in der sie in Querrichtung verläuft. Eine Transportanordnung umfasst Feldlaufräder, die den Rahmen in der Feldposition stützen, sowie Transportlaufräder. Letztere sind in der Feldposition vom Boden abgehoben und in Längsrichtung hinter dem Rahmen angeordnet. Zum Wechsel in die Transportposition werden die Transportlaufräder an einer gemeinsamen Aufhängung abgesenkt, so dass sie den Rahmen tragen und die Feldlaufräder vom Boden abgehoben werden. Dann wird die Aufhängung der Transportlaufräder um eine vertikale Achse geschwenkt, wodurch ein Transportlaufrad unter dem Rahmen hindurchgeführt wird, bis die Transportlaufräder in Querrichtung ausgerichtet und beiderseits des Rahmens angeordnet sind.

Aufgabe der Erfindung ist es, den Einsatz und Transport eines Anbaugeräts für eine Landmaschine zu vereinfachen.

Die Aufgabe wird gelöst mit einem Anbaugerät mit den Merkmalen des unabhängigen Patentanspruchs 1. Vorteilhafte Ausführungsformen sind den abhängigen Ansprüchen entnehmbar.

Dafür wird ein Anbaugerät zur Feldbearbeitung geschaffen, welches dazu eingerichtet ist, in einem Arbeitsmodus an eine Landmaschine gekoppelt und von dieser gestützt zu sein und in einem Transportmodus von einem Schlepper gezogen zu werden, aufweisend einen Rahmen, der im Arbeitsmodus wenigstens indirekt an die Landmaschine gekoppelt ist, sowie ein mit dem Rahmen verbundenes Fahrwerk mit einem Aufhängungsteil und wenigstens einem hieran gelagerten Laufrad, wobei das Fahrwerk durch wenigstens einen Aktor verstellbar ist zwischen einer dem Transportmodus entsprechenden Transportposition, in der es wenigstens teilweise vertikal unter dem Rahmen angeordnet ist, um diesen zu stützen, und einer dem Arbeitsmodus entsprechenden Arbeitsposition, in der es gegenüber der Transportposition wenigstens überwiegend vertikal aufwärts sowie horizontal seitwärts verlagert ist.

Der Begriff "Landmaschine" ist in diesem Zusammenhang nicht einschränkend auszulegen und bezeichnet jede Maschine, die in der Landwirtschaft eingesetzt werden kann, z.B. einen Traktor oder Schlepper, eine Mähmaschine, einen Feldhäcksler etc. Das Anbaugerät ist zur Feldbearbeitung eingerichtet, also z.B. zum Mähen, Häckseln, Ernten, Säen etc., wobei die begrifflich nicht zwischen "Feld" und "Acker" unterschieden wird. Beim Anbaugerät kann es sich z.B. um ein Direktschneidwerk, eine Pick-up, einen Maisvorsatz, ein Getreideschneidwerk oder eine Traktoranbaumaschine wie Kreiselegge oder Sämaschine handeln. In einem Arbeitsmodus kann das Anbaugerät an die Landmaschine gekoppelt werden und wird von dieser gestützt. Statt von einem Stützen kann man hier und im Folgenden auch von einem Tragen sprechen. Dabei ist es möglich, dass die Landmaschine nur einen Teil des Gewichts des Anbaugeräts trägt, bspw. derart, dass ein (normalerweise geringer) Anteil von einem (Hilfs-)Fahrwerk des Anbaugeräts getragen wird. Normalerweise ist das Anbaugerät allerdings im Arbeitsmodus vollständig durch die Landmaschine gestützt. Die Kopplung an die Landmaschine ist zum einen statischmechanischer Art, zum anderen kann aber auch eine Kopplung zur Energie- und/oder Kraftübertragung in mechanischer, elektrischer, pneumatischer und/oder hydraulischer Form hergestellt werden. Das Anbaugerät kann insbesondere als Vorsatzgerät eingesetzt werden, also in Fahrtrichtung vorderseitig der Landmaschine, dies ist aber nicht zwangsläufig der Fall. Im Arbeitsmodus, also angekoppelt an die Landmaschine, ist die Breite des Anbaugeräts (also seine Dimension in Richtung der Querachse der Landmaschine) in der Regel deutlich größer als seine Länge (also seine Dimension in Richtung der Längsachse der Landmaschine), bspw. wenigstens doppelt so groß oder wenigstens dreimal so groß.

In einem Transportmodus kann das Anbaugerät von einem Schlepper gezogen werden. Das Anbaugerät wird hierzu (normalerweise mittels einer Deichsel) an den Schlepper (bzw. eine Zugmaschine oder einen Traktor) angehängt und von diesem gezogen. Obgleich hier für die Landmaschine und den Schlepper unterschiedliche Begriffe verwendet werden, kann es sich in der Praxis um ein und dasselbe Fahrzeug handeln, welches im Arbeitsmodus das angekoppelte Anbaugerät trägt und dieses im Transportmodus (über eine geeignete Anhängerkupplung) zieht.

Das Anbaugerät weist einen Rahmen auf, der im Arbeitsmodus wenigstens indirekt an die Landmaschine gekoppelt ist. Der Rahmen ist normalerweise in sich starr ausgebildet und verleiht dem Anbaugerät mechanische Stabilität. Unterschiedliche bewegliche Teile können direkt oder indirekt an dem Rahmen gelagert sein, bspw. Messer eines Schneidwerks oder Häckslers, Zinken einer Pick-up oder dergleichen.

Entsprechend der mechanischen Stabilität ist der Rahmen auch dasjenige Element, das direkt oder indirekt (über eine geeignete Kopplungsvorrichtung, die ggf. auch als Teil des Rahmens angesehen werden kann) an der Landmaschine angekoppelt wird. Diejenige Seite des Rahmens, die an die Landmaschine angekoppelt wird, die somit also in angekoppeltem Zustand zur Landmaschine hin weist, wird hier und nachfolgend als Ankopplungsseite bezeichnet. Mit dem Rahmen ist ein Fahrwerk verbunden, das ein Aufhängungsteil und wenigstens ein hieran drehbar gelagertes Laufrad aufweist. Das Aufhängungsteil ist in der Regel in sich starr ausgebildet, kann aber aus einzelnen, starr miteinander verbundenen Elementen bestehen. Es ist mechanisch sowie hinsichtlich des Kraftflusses zwischen dem Rahmen und dem wenigstens ein Laufrad zwischengeordnet. Im Transportmodus steht das Anbaugerät auf dem Fahrwerk auf, welches Teil des Anbaugeräts ist und/oder in dieses integriert ist. Entsprechend wird das Anbaugerät (genauer gesagt, dessen Gewicht) im Transportmodus nicht oder nur zum Teil vom Schlepper gestützt.

Das Fahrwerk ist durch wenigstens einen Aktor verstellbar zwischen einer dem Transportmodus entsprechenden Transportposition, in der es wenigstens teilweise vertikal unter dem Rahmen angeordnet ist, um diesen zu stützen, und einer dem Arbeitsmodus entsprechenden Arbeitsposition, in der es gegenüber der Transportposition wenigstens überwiegend vertikal aufwärts sowie horizontal seitwärts verlagert ist. Die Begriffe "vertikal" und "horizontal" beziehen sich auf die bestimmungsgemäße Ausrichtung des Anbaugeräts in der Transportposition. U.U. kann die vertikale Richtung im Arbeitsmodus mit der Hochachse der Landmaschine übereinstimmen oder nur geringfügig hiervon abweichen. Das Fahrwerk ist in der Transportposition wenigstens teilweise unterhalb des Rahmens angeordnet, wodurch es ihn stützen kann. D.h., der Rahmen kann sich auf ihm abstützen. Die Transportposition entspricht dem Transportmodus. Sie ist somit ist diejenige Position, die für den Transportmodus vorgesehen ist. Wenn das Anbaugerät vom Fahrwerk gestützt wird, kann es von dem Schlepper gezogen werden. Die Arbeitsposition entspricht dem Arbeitsmodus. Sie ist somit diejenige Position, die für den Arbeitsmodus vorgesehen ist. Im Arbeitsmodus wäre die Transportposition kontraproduktiv, da sie die Bodenfreiheit des Anbaugeräts deutlich reduzieren würde.

In der Arbeitsposition ist das Fahrwerk im Verhältnis zur Transportposition - überwiegend oder insgesamt - in vertikaler Richtung aufwärts verlagert sowie in horizontaler Richtung seitwärts. Durch die seitliche Verlagerung kann das Fahrwerk gewissermaßen dem Rahmen ausweichen und seitlich desselben positioniert werden. Der wenigstens ein Aktor wirkt mittelbar oder unmittelbar zwischen dem Rahmen und dem Fahrwerk (genauer gesagt, dem Aufhängungsteil). Er kann insbesondere elektrisch, pneumatisch oder hydraulisch wirken. Bevorzugt ist er von außerhalb des Anbaugeräts ansteuerbar, bspw. von der Landmaschine aus, wenn das Anbaugerät an dieser angekoppelt ist.

Erfindungsgemäß ist das Aufhängungsteil durch einen Verstellmechanismus derart mit dem Rahmen verbunden, dass das Fahrwerk mittels einer Kombination aus einer wenigstens anteilig translatorisch erfolgenden Primärbewegung und einer rotatorisch um eine Schwenkachse erfolgenden Sekundärbewegung des Aufhängungsteils gegenüber dem Rahmen zwischen der Transportposition und der Arbeitsposition verstellbar ist. Der Verstellmechanismus kann den wenigstens einen Aktor aufweisen, er kann zusätzlich oder alternativ auch wenigstens ein passiv-mechanisches Element aufweisen, das der Kraftübertragung und/oder der Führung des Aufhängungsteils relativ zum Rahmen dient, z.B. ein Element zur Linearführung, einen Führungsarm, einen Umlenkhebel, ein Zugseil oder eine Zugstange etc. Der Verstellmechanismus ist derart eingerichtet, dass das Fahrwerk mittels einer Kombination aus zwei Bewegungen zwischen der Transport- und Arbeitsposition verstellt werden kann. Zum einen erfolgt eine Primärbewegung des Aufhängungsteils gegenüber dem Rahmen, die wenigstens teilweise translatorisch ist, die also eine Verschiebung zumindest beinhaltet, ggf. auch eine reine Verschiebung ist. Die Primärbewegung kann auch rotatorische, also drehende oder schwenkende Bewegungsanteile aufweisen, normalerweise ist die Primärbewegung jedoch zumindest überwiegend translatorisch. Außerdem erfolgt eine Sekundärbewegung, die rotatorisch ist und bei der eine Drehung um eine Schwenkachse erfolgt, d.h. das Aufhängungsteil dreht sich insgesamt um diese Schwenkachse. Die Begriffe "Primärbewegung" und "Sekundärbewegung" dienen hier nur der Unterscheidung und implizieren allgemein keine Reihenfolge, keinen Bewegungsumfang oder dergleichen. Die gesamte Verstellbewegung kann prinzipiell noch weitere Bewegungen beinhalten, es ist aber stark bevorzugt, dass sie nur aus der Primär- und der der Sekundärbewegung besteht. Eine Kombination aus Primärbewegung und Sekundärbewegung schließt hier die Möglichkeit ein, dass die genannten Bewegungen zeitlich parallel und/oder nacheinander erfolgen. Sofern die Bewegungen (ganz oder teilweise) zeitlich parallel erfolgen, kommt es zu einer Überlagerung der Bewegungen.

Das erfindungsgemäße Anbaugerät ermöglicht einen effizienten Wechsel zwischen der Transportposition, in welcher es durch das Fahrwerk getragen wird und wie ein gewöhnlicher Anhänger von einem Schlepper gezogen werden kann, und der Arbeitsposition, in der es in herkömmlicher Weise von der Landmaschine getragen und genutzt werden kann, ohne dass das Fahrwerk demontiert werden müsste oder den Einsatz des Anbaugeräts behindert. Erreicht wird der effiziente Wechsel durch die Kombination aus Primärbewegung und Sekundärbewegung, die sowohl gegenüber einer rein translatorischen Bewegung als auch gegenüber einer rein rotatorischen Bewegung vorteilhaft ist. Besondere Bedeutung kommt der Primärbewegung zu, da durch diese das Aufhängungsteil insgesamt verlagert wird, wodurch es im Vergleich zu einer reinen Schwenkbewegung vorteilhaft positioniert werden kann, so dass beim Schwenken entsprechend der Sekundärbewegung eine Kollision mit dem Boden unterhalb des Anbaugeräts oder mit dem Rahmen vermieden werden kann, was ohne die Primärbewegung, also mit einer reinen Schwenkbewegung u.U. nicht möglich wäre. Andererseits kann das Fahrwerk in einer für den Transport geeigneten Position angeordnet werden, was durch die translatorische Verschiebung ebenfalls vereinfacht oder überhaupt ermöglicht werden kann.

Insbesondere kann die Primärbewegung wenigstens anteilig translatorisch entlang einer Verschiebungsachse erfolgen. Dies schließt grundsätzlich die Möglichkeit ein, dass die translatorische Verschiebung anteilig auch quer zur Verschiebungsachse erfolgt. Bevorzugt erfolgt die Primärbewegung allerdings wenigstens anteilig translatorisch parallel zur Verschiebungsachse. Der translatorische Anteil der Primärbewegung ist somit parallel zur Verschiebungsachse ausgerichtet. Wie bereits oben erwähnt, kann die Primärbewegung zusätzlich einen rotatorischen Anteil aufweisen.

Bevorzugt weist der Verstellmechanismus ein Schlittenelement auf, mit welchem das Aufhängungsteil um die Schwenkachse schwenkbar verbunden ist und das translatorisch verschiebbar mit dem Rahmen verbunden ist. D.h., die Primärbewegung beruht dabei ganz oder teilweise auf einer translatorischen Verschiebung des Schlittenelements (mit welchem das Aufhängungsteil verbunden ist), während die Sekundärbewegung auf einer Schwenkbewegung des Aufhängungsteils gegenüber dem Schlittenelement beruht. Das Schlittenelement fungiert hierbei als Verbindungsglied zwischen Rahmen und Aufhängungsteil und kann einerseits auf Seiten des Rahmens an die translatorische Verschiebung (sowie ggf. weitere Bewegungskomponenten) der Primärbewegung angepasst sein, während es andererseits auf Seiten des Aufhängungsteils an die rotatorische Sekundärbewegung angepasst ist. Bevorzugt ist das Schlittenelement entlang der Verschiebungsachse translatorisch verschiebbar mit dem Rahmen verbunden.

Grundsätzlich sind unterschiedliche translatorischen Verstellungen im Rahmen der Primärbewegung denkbar. Es hat sich allerdings als vorteilhaft herausgestellt, wenn die Verstellung annähernd horizontal erfolgt. Dabei kann die Verschiebungsachse bezogen auf die Arbeitsposition in einem Winkel von höchstens 30°, bevorzugt höchstens 20°, weiter bevorzugt höchstens 10°, zur Horizontalen verlaufen. Hinsichtlich der Definition der Horizontalen (also der horizontalen Ebene) wird eine Situation betrachtet, in der das Anbaugerät bestimmungsgemäß an die auf einer horizontalen Fläche stehende Erntemaschine angebaut ist. Dadurch, dass die Verschiebungsachse näherungsweise horizontal verläuft, kann das Fahrwerk bspw. optimal zu einem Ende des Anbaugeräts hin verlagert werden. Außerdem wirkt allenfalls eine geringe Komponente der Gewichtskraft des Fahrwerks entlang der Verschiebungsachse, so dass ein dort wirkender Aktor wenig belastet wird und nur eine geringe Kraft und/oder Leistung benötigt.

Hinsichtlich der Ausrichtung der Verschiebungsachse sowie der Schwenkachse relativ zueinander bestehen grundsätzlich keine Einschränkungen. Bevorzugt verläuft die Schwenkachse im Winkel zur Verschiebungsachse. Die genannten Achsen sind also gegeneinander geneigt und verlaufen nicht-parallel. Der Winkel zwischen beiden Achsen kann wenigstens 5°, wenigstens 20° oder wenigstens 45° betragen.

Wie bereits erwähnt, ist eine zeitliche Überlagerung der Primärbewegung und der Sekundärbewegung denkbar. Eine bevorzugte Ausgestaltung sieht allerdings vor, dass der Verstellmechanismus dazu eingerichtet ist, die Primärbewegung und die Sekundärbewegung wenigstens überwiegend nacheinander auszuführen. Insbesondere kann er eingerichtet sein, die genannten Bewegungen vollständig nacheinander auszuführen. Beim Verstellen aus der Transportposition erfolgt in aller Regel die Primärbewegung ganz oder teilweise vor der Sekundärbewegung. Erfolgen die Bewegungen vollständig nacheinander, wird das Fahrwerk aus der Transportposition (oder ggf. der Arbeitsposition) zunächst durch die Primärbewegung in eine Zwischenposition verstellt, bevor es durch die Sekundärbewegung aus der Zwischenposition in die Arbeitsposition (oder ggf. die Transportposition) verstellt wird.

Für einen sicheren Transport muss das Anbaugerät durch wenigstens zwei Laufräder gestützt werden. Unter Umständen könnten hierfür zwei separate Aufhängungsteile mit jeweils eigenem Verstellmechanismus vorgesehen sein. Es ist allerdings bevorzugt, dass am Aufhängungsteil wenigstens zwei Laufräder gelagert sind. Normalerweise sind genau zwei Laufräder vorgesehen, die parallel angeordnet und in Richtung ihrer jeweiligen Rotationsachse voneinander beabstandet sind. Durch diese Ausführungsform weist das Fahrwerk insgesamt ebenso wie das Aufhängungselement Abmessungen auf, die das bodenfreie Schwenken zwischen den beiden Positionen zu einer besonderen Herausforderung machen. Allerdings hat sich gezeigt, dass sich dies durch die erfindungsgemäße Kombination aus Primärbewegung und Sekundärbewegung gut realisieren lässt.

Vorteilhaft wird das Aufhängungsteil bei Verstellen aus der Transportposition durch die Primärbewegung zu einer Heckseite des Rahmens hin verstellt und das Fahrwerk wird durch die Sekundärbewegung wenigstens teilweise auf Höhe des Rahmens an der Heckseite am Rahmen vorbeigeführt. Die Heckseite ist normalerweise die in angehängtem Zustand vom Schlepper abgewandte Seite, also z.B. einer Deichselseite gegenüberliegt, an welcher eine o.g. Deichsel angekoppelt ist. Durch das Verstellen zur Heckseite hin kann das Fahrwerk bei der Sekundärbewegung gewissermaßen über das Heck des Rahmens hinaus schwenken und so am Rahmen vorbeigeführt werden, obwohl es sich wenigstens teilweise (bezüglich der Hochachse) auf Höhe des Rahmens bewegt. Auf diese Weise wird eine Kollision mit dem Rahmen verhindert. Man könnte sagen, dass das Fahrwerk teilweise um das Heck des Rahmens herumgeschwenkt wird.

Bevorzugt ist das Fahrwerk in der Arbeitsposition wenigstens überwiegend vertikal zumindest auf Höhe des Rahmens sowie auf einer Rückzugsseite horizontal seitlich desselben angeordnet. Der Begriff "Rückzugsseite" bezieht sich darauf, dass das Fahrwerk gewissermaßen zu dieser Seite zurückgezogen wird. Insbesondere ist es möglich, dass das Fahrwerk in der Arbeitsposition vollständig wenigstens auf Höhe des Rahmens angeordnet ist, also überhaupt nicht mehr vertikal abwärts gegenüber dem Rahmen absteht. Somit wird in der Arbeitsposition eine optimale Bodenfreiheit erreicht. Bezogen auf den Arbeitsmodus ist die Rückzugsseite oftmals entgegen der Fahrtrichtung der Landmaschine angeordnet. Die Rückzugsseite kann insbesondere mit der Kopplungsseite identisch sein und horizontal seitlich einer Deichselseite angeordnet sein, an welcher der Schlepper (normalerweise über eine Deichsel) angekoppelt wird. In vielen Fällen, bspw. bei einem Schneidvorsatz, handelt es sich bei der Deichselseite um eine Schmalseite und bei der Rückzugsseite oder Ankopplungsseite um eine Langseite.

Eine bevorzugte Ausführungsform sieht vor, dass das Aufhängungsteil einen Achsabschnitt aufweist, an dem das wenigstens ein Laufrad gelagert ist, und einen hiermit starr verbundenen Seitenabschnitt, der schwenkbar mit dem Schlittenelement verbunden ist, wobei in der Transportposition der Rahmen auf dem Achsabschnitt aufliegt und sich der Seitenabschnitt vom Achsabschnitt aus auf der Rückzugsseite seitlich des Rahmens aufwärts zum Schlittenelement erstreckt. Der Achsabschnitt und der Seitenabschnitt können einstückig ausgebildet sein und es ist möglich, dass keine klare Abgrenzung zwischen den beiden Abschnitten möglich ist. Funktionell besteht die Hauptfunktion des Achsabschnitts darin, die Gewichtskraft des Rahmens zu dem bzw. den Laufrädern zu übertragen, während die Hauptfunktion des Seitenabschnitts darin besteht, die Verbindung zum Schlittenelement herzustellen, welches an einer für die schwenkende Sekundärbewegung geeigneten Stelle angeordnet ist. Der Seitenabschnitt verläuft horizontal seitlich des Rahmens, und zwar auf der Rückzugseite. Dementsprechend ist auch das Schlittenelement, zu dem sich der Seitenabschnitt erstreckt, auf der Rückzugsseite angeordnet. Die Form des Seitenabschnitts kann an die Außenkontur des Rahmens angepasst sein, damit der Seitenabschnitt in der Transportposition möglichst dicht am Rahmen positioniert sein kann. Er kann daher unter Umständen gebogen und/oder abgewinkelt sein, während der Achsabschnitt normalerweise insgesamt gerade ausgebildet ist. Der Seitenabschnitt kann sich nicht nur seitlich des Rahmens erstrecken, sondern auch unterhalb desselben und er kann teilweise auf Höhe des Achsabschnitts angeordnet sein.

Es sind Ausgestaltungen der Erfindung denkbar, in denen die Primärbewegung eine reine translatorische Verschiebung ist. Eine vorteilhafte Weiterentwicklung sieht allerdings vor, dass der Verstellmechanismus eine Drehführung aufweist, durch welche die Verschiebung des Schlittenelements entlang der Verschiebungsachse an eine Drehung um die Verschiebungsachse zwangsgekoppelt ist, durch welche das Aufhängungsteil vom Rahmen fort geschwenkt wird. Die Drehführung sorgt für eine Zwangskopplung, so dass die Verschiebung entlang der Verschiebungsachse nicht ohne die Drehung um die Verschiebungsachse erfolgen kann (und umgekehrt). Die Drehung kann gleichmäßig entlang eines Verschiebungswegs der Primärbewegung erfolgen, sie könnte aber auch unregelmäßig erfolgen, bspw. derart, dass sie nur auf einem Teilweg stattfindet oder dass sie zu einem Ende des Verschiebungswegs hin zunimmt. Insgesamt führt die Kombination aus Verschiebung und Drehung zu einer schraubenlinienartigen Bewegung des Schlittenelements (sowie des hiermit verbundenen Aufhängungsteils). Durch die Drehung wird das Aufhängungsteil vom Rahmen fortgeschwenkt, d.h. der Abstand zwischen Rahmen und Aufhängungsteil vergrößert sich. Die Drehung des Schlittenelements bedeutet dabei auch eine Positionsveränderung der Schwenkachse. Beide Effekte können dazu dienen, bei der Sekundärbewegung eine Kollision zwischen Fahrwerk und Rahmen zu vermeiden.

Hinsichtlich der Drehführung sind unterschiedliche Ausgestaltungen denkbar. Insbesondere kann diese eine starr mit dem Rahmen verbundene Führungsbahn aufweisen sowie ein entlang der Führungsbahn verschiebbar geführtes Führungselement, welches mit dem Schlittenelement zumindest drehfest bezüglich der Verschiebungsachse verbunden ist. Die Führungsbahn erstreckt sich dabei entlang der Verschiebungsachse, verläuft allerdings nicht parallel zu dieser, sondern definiert durch ihren Verlauf die vorgesehene Drehung. Das Führungselement bildet mit der Führungsbahn einen Formschluss, so dass es in oder an ihr geführt ist. Um die Drehung des Schlittenelements zu bewirken, ist das Führungselement zumindest drehfest bezüglich der Verschiebungsachse mit dem Schlittenelement verbunden. Normalerweise ist es starr mit diesem verbunden oder ist ggf. auch einstückig mit diesem gefertigt. Es könnte auch drehbar am Schlittenelement gelagert sein, um entlang der Führungsbahn abrollen zu können. Die Drehbarkeit ist in diesem Fall allerdings nicht bezüglich der Verschiebungsachse gegeben.

Eine Ausführungsform sieht vor, dass eine parallel zur Verschiebungsachse verlaufende Führungsstange mit dem Rahmen verbunden ist, wobei das Schlittenelement einen außenseitig an der Führungsstange anliegenden Hülsenabschnitt aufweist, der gegenüber der Führungsstange entlang der Verschiebungsachse verschiebbar und um die Verschiebungsachse drehbar ist. Die Führungsstange kann auch als Hohlstange ausgebildet sein und in diesem Fall als Führungsrohr bezeichnet werden. Der Hülsenabschnitt, welcher bevorzugt starr mit dem Schlittenelement verbunden ist, umgibt die Führungsstange ganz oder wenigstens überwiegend außenseitig und bildet somit quer zur Verschiebungsachse einen Formschluss, so dass eine translatorischen Verschiebung nur in Richtung der Verschiebungsachse möglich ist. Allerdings sind der Innenquerschnitt des Hülsenabschnitts und der Außenquerschnitt der Führungsstange so aufeinander abgestimmt, dass sich der Hülsenabschnitt (und somit das gesamte Schlittenelement) bezüglich der Führungsstange um die Verschiebungsachse drehen kann. Normalerweise sind beide genannten Profile kreisförmig, es wären allerdings auch Abwandlungen denkbar, bspw. derart, dass sich die beiden Profile nur um einen bestimmten Maximalwinkel gegeneinander verdrehen lassen. Alternativ könnte der Hülsenabschnitt auch drehfest auf der Führungsstange aufsitzen und seinerseits drehbar gegenüber dem Schlittenelement gelagert sein. Diese Ausführungsform wird normalerweise mit einer oben erwähnten Drehführung kombiniert, bspw. der Kombination einer Führungsbahn und eines Führungselements.

Es ist im Allgemeinen ausreichend, wenn eine vergleichsweise geringfügige Drehung des Schlittenelements im Verlauf der Primärbewegung erfolgt. So kann die Primärbewegung eine Drehung des Schlittenelements um die Verschiebungsachse um einen Winkel zwischen 1 ° und 20°, bevorzugt zwischen 2° und 10°, weiter bevorzugt zwischen 3° und 7°, beinhalten. Dies kann ausreichen, um z.B. das Aufhängungsteil ausreichend weit vom Rahmen fort zu schwenken und so die weitere Schwenkbewegung, d.h. die Sekundärbewegung vorzubereiten.

Insbesondere wenn die Primärbewegung und die Sekundärbewegung wenigstens teilweise nacheinander erfolgen sollen, lässt sich dies schwierig mit nur einem Aktor realisieren. Es ist daher bevorzugt, dass die Primärbewegung durch einen ersten Aktor antreibbar ist und die Sekundärbewegung durch einen hiervon unabhängigen zweiten Aktor antreibbar ist. Jeder der genannten Aktoren kann insbesondere elektrisch, pneumatisch, hydraulisch oder elektrohydraulisch wirken. Beide Aktoren können auf dem gleichen Antriebsprinzip beruhen oder auf unterschiedlichen Antriebsprinzip, bspw. derart, dass ein Aktor pneumatisch wirkt und der andere hydraulisch. Normalerweise sind beide Aktoren der Rückzugsseite des Rahmens angeordnet.

Der erste Aktor kann insbesondere als Linearaktor ausgebildet sein, der zwischen dem Rahmen und dem oben erwähnten Schlittenelement wirkt. Er kann sowohl mit dem Rahmen als auch mit dem Schlittenelement jeweils direkt oder indirekt verbunden sein. Sofern die Primärbewegung sich auf eine Translation beschränkt, könnte der erste Aktor sogar starr mit dem Rahmen sowie mit dem Schlittenelement verbunden sein. Wenn eine oben erwähnte Drehung um die Verschiebungsachse hinzu kommt, ist eine bewegliche Lagerung notwendig, bspw. über zwei Zylinder-Schwenklager mit einem Freiheitsgrad oder mit mehreren Freiheitsgraden.

Hinsichtlich der Kraftübertragung vom zweiten Aktor auf das Schlittenelement sowie den Seitenabschnitt sind unterschiedliche Möglichkeiten gegeben. Insbesondere ist zu unterscheiden zwischen direkter und indirekter Kraftübertragung. Bevorzugt ist der zweite Aktor als Linearaktor ausgebildet und einerseits mit dem Schlittenelement sowie andererseits mit einem Umlenkhebel verbunden, der schwenkbar mit dem Schlittenelement verbunden ist und der über einen Verbindungslenker mit dem Seitenabschnitt verbunden ist. Jede der genannten Verbindungen kann dabei über einen Schwenklager mit normalerweise einem Freiheitsgrad, ggf. aber auch mehreren Freiheitsgraden, realisiert sein. Bei dieser Ausgestaltung erfolgt die Kraftübertragung vom zweiten Aktor auf den Seitenabschnitt über zwei zwischengeordnete Bauteile, nämlich zum einen den Umlenkhebel, der schwenkbar mit dem Schlittenelement verbunden ist. Für die Anbindung kann ein Umlenkhebel-Schwenklager eingesetzt werden, das lediglich einen Freiheitsgrad aufweist. Zum anderen erfolgt die Kraftübertragung vom Umlenkhebel auf den Seitenabschnitt über einen Verbindungslenker. Dieser ist über ein erstes Verbindungslenker-Schwenklager mit dem Umlenkhebel verbunden und über ein zweites Verbindungslenker-Schwenklager mit dem Seitenabschnitt. Unter Umständen kann jedes der Verbindungslenker-Schwenklager lediglich einen Freiheitsgrad aufweisen, je nach Ausführungsform kann es auch günstig sein, dass wenigstens ein Verbindungslenker-Schwenklager mehrere Freiheitsgrade aufweist und bspw. als Gelenklager ausgebildet ist. Von besonderer Bedeutung ist in diesem Zusammenhang der schwenkbare Umlenkhebel, in welchem der zweite Aktor ein Drehmoment erzeugt. Je nach räumlicher Anordnung der verschiedenen Schwenklager führt die Kraft des zweiten Aktors u.U. zu einer größeren oder kleineren Kraft auf den Verbindungslenker. Außerdem ist eine Kraftumlenkung möglich, so dass eine optimale Zug- und/oder Druckwirkung auf den Seitenabschnitt ausgeübt werden kann. Der Verbindungslenker ebenso wie der Umlenkhebel sind normalerweise als starre Bauteile ausgebildet, d.h. sie erfahren keine nennenswerte Verformung beim Normalbetrieb. Optional kann bspw. die Länge des Verbindungslenkers manuell justierbar sein.

Insbesondere wenn das Anbaugerät vom Schlepper gezogen wird, muss unter Sicherheitsaspekten gewährleistet sein, dass das Fahrwerk in der vorgesehenen Transportposition verbleibt und sich nicht verstellen kann. Um dies sicherzustellen, kann das Anbaugerät ein Arretierungselement aufweisen, das verstellbar ist zwischen einer Arretierungsposition, in der es das Fahrwerk in der Transportposition arretiert, und einer Freigabeposition, in der es ein Verstellen des Fahrwerks in die Arbeitsposition freigibt. Das Arretierungselement kann entweder am Fahrwerk oder am Rahmen angeordnet sein und wirkt in der Arretierungsposition, z.B. nach Art eines Riegels, mit einer Struktur am jeweils anderen Element (Rahmen oder Fahrwerk) zusammen, normalerweise durch einen Formschluss. Das Arretierungselement kann z.B. passiv über ein Federelement bewegbar sein oder aktiv über wenigstens einen (dritten) Aktor.

Wie bereits oben erwähnt wurde, ist das Anbaugerät normalerweise über eine Deichsel an den Schlepper ankoppelbar. Diese Deichsel kann verstellbar mit dem Rahmen verbunden sein, genauer gesagt kann sie ebenfalls zwischen einer dem Transportmodus zugeordneten Transportposition und einer dem Arbeitsmodus zugeordneten Arbeitsposition verstellbar sein. Die Verstellbarkeit, welche nicht Gegenstand der vorliegenden Anmeldung ist, kann über ein oder mehrere hierfür vorgesehene Aktoren realisiert sein. Es kann vorgesehen sein, dass das Fahrwerk nur in die Arbeitsposition verstellt werden kann, wenn die Deichsel in ihre Arbeitsposition verstellt wird oder bereits verstellt wurde. Hierzu kann ein Kopplungsmechanismus zwischen der Deichsel und dem Arretierungselement wirken, um das Arretierungselement in der Arretierungsposition zu halten, wenn die Deichsel in der Transportposition ist, und es in die Freigabeposition zu stellen, wenn die Deichsel in die Arbeitsposition verstellt wird. Über einen derartigen Kopplungsmechanismus, der bspw. einfach mechanisch mittels einer Kopplungsstange oder einem Zugseil wirken kann, wird das Arretierungselement gewissermaßen entriegelt, wenn die Deichsel in die Arbeitsposition verstellt wird. Alternativ kann z.B. auch eine übergeordnete Steuerung für die genannte Reihenfolge der Verstellung von Deichsel und Fahrwerk sorgen, oder es kann von Seiten der Deichsel ein elektrisches Signal an den Verstellmechanismus gesendet werden, z.B. an den o.g. dritten Aktor, der daraufhin die Freigabe des Arretierungselements auslöst. Auch ist z.B. bei einem hydraulisch oder pneumatisch wirkenden dritten Aktor denkbar, dass dieser seitens der Deichsel über ein Ventil aktiviert werden kann.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht eines erfindungsgemäßen Anbaugeräts mit einem Fahrwerk in einer Transportposition;
- Fig. 2: eine Seitenansicht eines Teils des Anbaugeräts aus Fig. 1 mit dem Fahrwerk in einer Zwischenposition;
- Fig. 3: eine Seitenansicht eines Teils des Anbaugeräts aus Fig. 1 mit dem Fahrwerk in einer Arbeitsposition;
- Fig. 4: eine perspektivische Ansicht eines Teils des Anbaugeräts aus Fig. 1 mit dem Fahrwerk in der Transportposition; sowie
- Fig. 5: eine perspektivische Ansicht eines Teils des Anbaugeräts aus Fig.1 mit dem Fahrwerk in der Arbeitsposition.

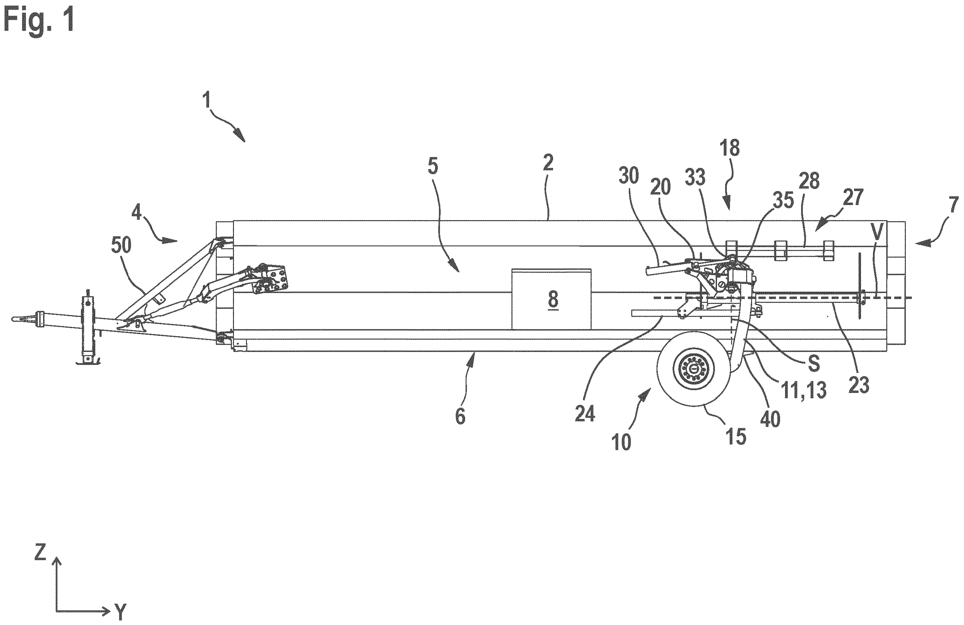

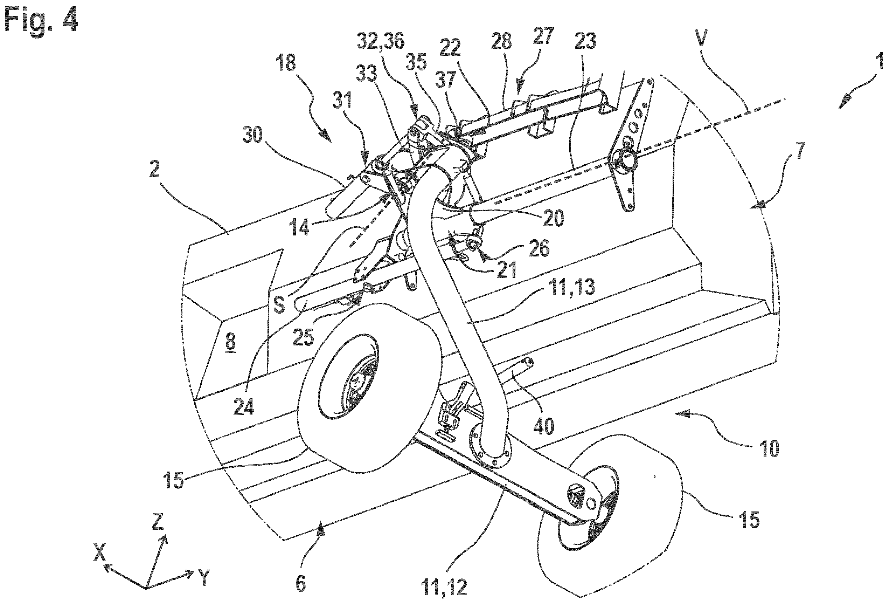

Fig. 1 zeigt ein erfindungsgemäßes Anbaugerät 1, in diesem Fall einen Erntevorsatz für einen Feldhäcksler. Das Anbaugerät 1 weist einen Rahmen 2 auf, der in einem Arbeitsmodus mit einem hier schematisch dargestellten Ankopplungsbereich 8, der auf einer Ankopplungsseite 5 angeordnet ist, an den hier nicht dargestellten Feldhäcksler gekoppelt wird. In diesem Arbeitsmodus ist das Anbaugerät 1 freitragend durch den Feldhäcksler gestützt. In den Figuren sind, bezogen auf den angekoppelten Zustand des Anbaugeräts 1, die Längsachse X, die Querachse Y sowie die Hochachse Z des Feldhäckslers eingezeichnet. Der Rahmen 2 ist in Richtung der Querachse Y deutlich länger als in Richtung der Längsachse X, so dass die Ankopplungsseite 5, ebenso wie eine gegenüberliegende Vorderseite (in den Figuren nicht sichtbar), als Langseite des Rahmens 2 bezeichnet werden kann. Demgegenüber kann eine seitlich der Ankopplungsseite 5 angeordnete Deichselseite 4 als Schmalseite bezeichnet werden. Fig. 1 sowie die Detailansicht in Fig. 4 zeigen das Anbaugerät 1 entsprechend einem Transportmodus, in welchem es von einem ebenfalls nicht dargestellten Schlepper, bspw. dem Feldhäcksler selbst, gezogen werden kann. Die vorgesehene Fahrtrichtung verläuft dabei (anti-)parallel zur Querachse Y, so dass bei Straßenfahrt eine zulässige Breite quer zur Fahrtrichtung nicht überschritten wird. Der Rahmen 2 ist mit einer Deichsel 50 verbunden, über die er an den Schlepper angekoppelt wird. Die Deichsel 50 ist verstellbar zwischen einer Transportposition, welche bspw. in Fig. 1 dargestellt ist und in der sie von der Deichselseite 4 abragt, und einer Arbeitsposition, in der sie zum Rahmen 2 hin geschwenkt ist. Die entsprechende Schwenkbewegung ist hier nicht dargestellt.

Das Anbaugerät 1 weist außerdem ein Fahrwerk 10 auf, das im Transportmodus in einer Transportposition angeordnet ist, in der es wenigstens teilweise vertikal unter dem Rahmen 2 angeordnet ist, um diesen zu stützen. Wenn das Anbaugerät 1 durch den Schlepper gezogen wird, lastet ein überwiegender Teil des Gewichts des Rahmens 2 auf dem Fahrwerk 10. Das Fahrwerk 10 weist zwei Laufräder 15 auf, die drehbar an einem Aufhängungsteil 11 gelagert sind, genauer gesagt einem Achsabschnitt 12 desselben. In der Transportposition liegt der Rahmen 2 mit einer Unterseite 6 auf dem Achsabschnitt 12 auf, so dass er sich über die Laufräder 15 gegen einen hier nicht dargestellten Boden abstützen kann. Das Aufhängungsteil 11 weist außer dem Achsabschnitt 12 einen hiermit starr verbundenen Seitenabschnitt 13 auf, der sich teilweise auf der Unterseite 6 sowie auf der Ankopplungsseite 5, welche nachfolgend auch als Rückzugsseite bezeichnet wird, seitlich des Rahmens 2 aufwärts zu einem Aufhängungs-Lagerelement bzw. Aufhängungs-Schwenklager 14 erstreckt, über welche das Aufhängungsteil 11 mit einem Schlittenelement 20 eines Verstellmechanismus 18 verbunden ist.

Das Aufhängungs-Schwenklager 14 ermöglicht eine Schwenkbewegung des Aufhängungsteils 11 und somit des gesamten Fahrwerks 10 relativ zum Schlittenelement 20 um eine Schwenkachse S. Das Schlittenelement 20 weist einen Hülsenabschnitt 21 auf, der von außen an einer Führungsstange 23 angreift und an dieser verschiebbar geführt ist. Die Führungsstange 23, die hier hohl ausgebildet ist und auch als Führungssrohr bezeichnet werden kann, ist starr mit dem Rahmen 2 verbunden. Insgesamt ist eine Verschiebbarkeit des Schlittenelements 20 - und des hiermit verbundenen Aufhängungsteils 11 - gegenüber dem Rahmen 2 entlang einer durch die Führungsstange 23 definierten Verschiebungsachse V gegeben. Die Verschiebungsachse V verläuft parallel zur Querachse Y und somit horizontal. Die Verschiebungsachse V und die Schwenkachse S verlaufen im Winkel zueinander, beispielsweise in einem Winkel von über 70°. Das Schlittenelement 20 weist außerdem ein (in Fig. 4 erkennbares) Führungselement 22 auf, das mit einer Führungsbahn 28 eingreift und mit dieser zusammen eine Drehführung 27 bildet. Die Führungsbahn 28 verläuft nicht parallel zur Verschiebungsachse V, sondern nach Art einer Schraubenlinie um diese herum. Somit bewirkt eine Verschiebung des Schlittenelements 20 entlang der Führungsstange 23 eine Drehung um die Verschiebungsachse V. Allerdings weicht der Verlauf der Führungsbahn 28 nur geringfügig von der Verschiebungsachse V ab, so dass eine Verschiebung des Schlittenelement 20 entlang der Führungsstange 23 insgesamt lediglich zu einer Drehung um einen Winkel von 4° führt. Ein erster Aktor, der diesem Fall als (bspw. hydraulisch wirkender) erster Zylinder 24 ausgebildet ist, ist einerseits über ein erstes Zylinder-Schwenklager 25 mit dem Rahmen 2 verbunden sowie andererseits über ein zweites Zylinder-Schwenklager 26 mit dem Schlittenelement 20. Er bewirkt durch Längenveränderung die Verschiebung des Schlittenelements 20 entlang der Verschiebungsachse V sowie die hieran zwangsgekoppelte Drehung um die Verschiebungsachse V, welche zusammen einer Primärbewegung entsprechen.

Wie bereits erwähnt, ist das Seitenteil 13 des Aufhängungselements 11 über das Aufhängungs-Schwenklager 14 mit dem Schlittenelement 20 verbunden. Hierdurch wird eine Schwenkbewegung ermöglicht, die nachfolgend als Sekundärbewegung bezeichnet wird. Angetrieben wird diese Sekundärbewegung durch einen zweiten Aktor, der als (bspw. hydraulisch wirkender) zweiter Zylinder 30 ausgebildet ist und über ein drittes Zylinder-Schwenklager 31 mit dem Schlittenelement 20 sowie über ein viertes Zylinder-Schwenklager 32 mit einem Umlenkhebel 33 verbunden. Letzterer ist wiederum über ein Umlenkhebel-Schwenklager 34 mit dem Schlittenelement 20 verbunden. Der Umlenkhebel 33 ist über ein erstes Verbindunglenker-Schwenklager 36 (welches in diesem Fall koaxial zum vierten Zylinder-Schwenklager 32 ist) mit einem Verbindunglenker 35 verbunden, der wiederum über ein zweites Verbindunglenker-Schwenklager 37 im Abstand zur Schwenkachse S mit dem Seitenabschnitt 13 verbunden ist. Die genannten Schwenklager 31, 32, 34, 36, 37 können jeweils einen Freiheitsgrad aufweisen, es wären aber auch mehrere Freiheitsgrade denkbar.

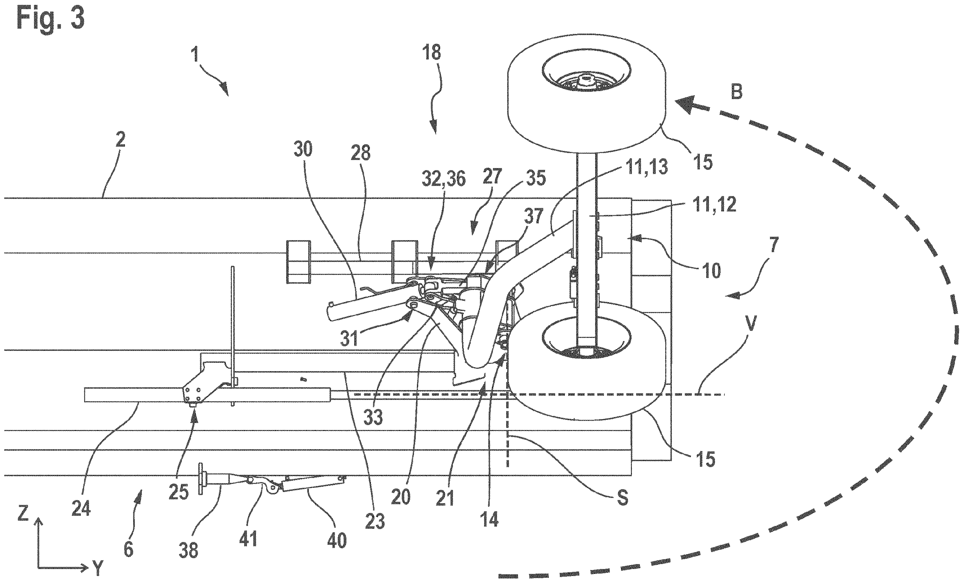

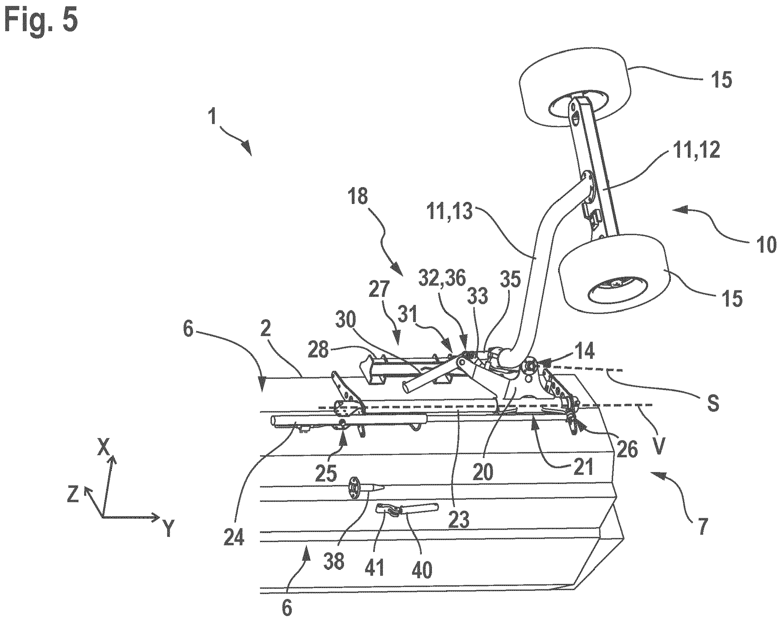

An der Unterseite 6 des Rahmens 2 ist ein Arretierungselement 41 angeordnet, mittels dessen das Fahrwerk 10 in der Transportposition arretiert werden kann. Außerdem greift ein starr mit dem Rahmen 2 verbundener Sicherungszapfen 38 in eine in den Figuren nicht sichtbare Öffnung im Achsabschnitt 12 ein und trägt ebenfalls zur mechanischen Verbindung zwischen Rahmen 2 und Fahrwerk 10 bei. Das Arretierungselement 41 kann über einen dritten Aktor, welcher vorliegend als dritter Zylinder 40 ausgebildet ist, gelöst werden. Wenn das Anbaugerät 1 zur Feldbearbeitung eingesetzt werden soll, wird es zunächst an den Feldhäcksler angekoppelt, so dass dieser es freitragend stützt. Anschließend kann vom Feldhäcksler aus die Deichsel 50 von der in Fig. 1 dargestellten Transportposition in ihre Arbeitsposition verstellt werden. Das Verstellen des dritten Zylinders 40 ist an das Verstellen der Deichsel 50 gekoppelt, so dass das Arretierungselement 41 erst dann gelöst wird, wenn ein Verstellen der Deichsel 50 aus ihrer Transportposition in ihre Arbeitsposition zumindest begonnen hat. Das Verstellen der Deichsel 50 könnte bspw. ein Ventil ansteuern, durch welches der dritte Zylinder 40 hydraulisch aktiviert wird. Alternativ könnten allerdings auch die Deichsel 50 und der dritte Zylinder 40 durch eine übergeordnete Steuerung angesteuert werden, die den dargestellten Zeitablauf garantiert. Ebenfalls vom Feldhäcksler aus werden der erste Zylinder 24 sowie der zweite Zylinder 30 angesteuert, um die Verstellung des Fahrwerks 10 in eine in Fig. 3 und 5 dargestellte Arbeitsposition zu bewirken. In der Arbeitsposition ist das Fahrwerk 10 überwiegend horizontal seitlich des Rahmens 2 und vertikal wenigstens auf Höhe desselben (teilweise sogar darüber) angeordnet.

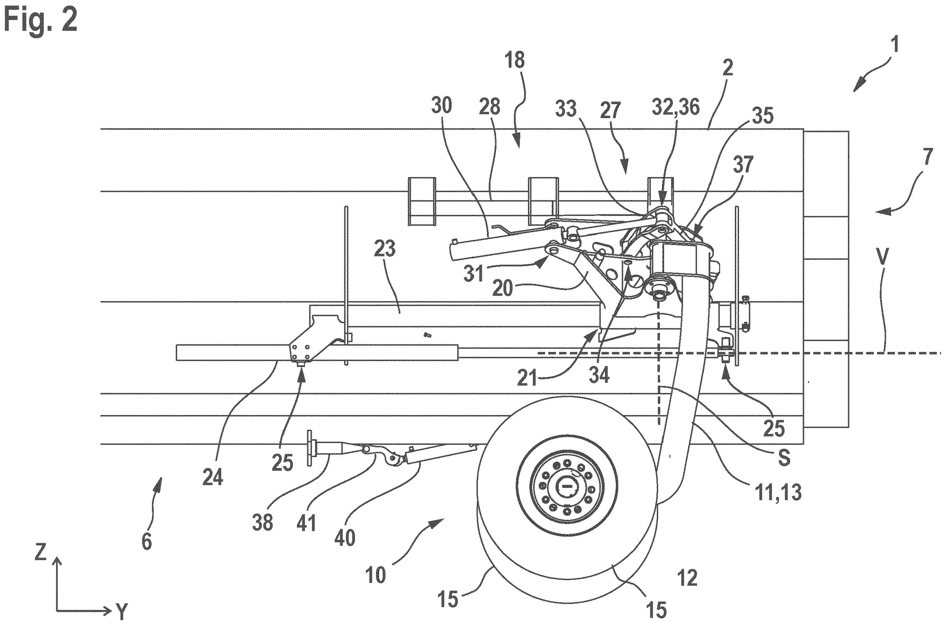

Nach dem Lösen des Arretierungselements 41 wird zunächst der erste Zylinder 24 angesteuert, so dass er ausfährt und eine Druckkraft auf das Schlittenelement 20 ausübt. Dies führt wie oben beschrieben zur Primärbewegung, also einer translatorischen Verschiebung entlang der Verschiebungsachse V und einer zeitlich parallel erfolgenden Drehung um die Verschiebungsachse V, durch die das Fahrwerk 10 um einen Winkel von 4° vom Rahmen 2 fortgeschwenkt wird. Durch das Verschieben des Fahrwerks 10 löst sich der Sicherungszapfen 38 aus der Öffnung des Achsabschnitts 12, so dass dieser z.B. für die Schwenkbewegung freigegeben wird. Die Primärbewegung führt das Fahrwerk 10 aus der in Fig. 1 dargestellten Transportposition in eine in Fig. 2 dargestellte Zwischenposition, in der es wesentlich näher an einer gegenüber der Deichselseite 4 angeordneten Heckseite 7 des Rahmens 2 angeordnet ist.

Aus dieser Zwischenposition wird das Fahrwerk 10 anschließend entsprechend der Sekundärbewegung in die in Fig. 3 sowie 5 dargestellte Arbeitsposition geschwenkt. Durch eine entsprechende Ansteuerung zieht sich der zweite Zylinder 30 zusammen und übt eine Zugkraft auf den Umlenkhebel 33 aus, die über ein entsprechendes Drehmoment wiederum zu einer Zugkraft auf den Verbindunglenker 35 führt. Letztere führt wiederum zu einem Drehmoment auf das Aufhängungsteil 11 und somit zur Schwenkbewegung um die Schwenkachse S, welche in diesem Beispiel um einen Winkel von ca. 180° erfolgt. In Fig.3 ist eine ungefähre Bewegungsbahn B eines Laufrads 15 beim Schwenken aus der Zwischenposition in die Arbeitsposition eingezeichnet. Gut erkennbar ist, dass sich das Laufrad 15 (ebenso wie andere Teile des Fahrwerks 10) an der Heckseite 7 auf Höhe des Rahmens 2 an diesem vorbeibewegt. Dies wird wiederum durch die Kombination aus Primärbewegung und Sekundärbewegung ermöglicht, bei welcher die Primärbewegung in die Zwischenstellung das Fahrwerk 10 geeignet positioniert und auf die Sekundärbewegung vorbereitet, bei der auf diese Weise eine Kollision zwischen dem Fahrwerk 10 und dem Rahmen 2 vermieden wird.

## Patentansprüche

1. Anbaugerät (1) zur Feldbearbeitung, welches dazu eingerichtet ist, in einem Arbeitsmodus an eine Landmaschine gekoppelt und von dieser gestützt zu sein und in einem Transportmodus von einem Schlepper gezogen zu werden, aufweisend einen Rahmen (2), der im Arbeitsmodus wenigstens indirekt an die Landmaschine gekoppelt ist, sowie ein mit dem Rahmen (2) verbundenes Fahrwerk (10) mit einem Aufhängungsteil (11) und wenigstens einem hieran gelagerten Laufrad (15), wobei das Fahrwerk (10) durch wenigstens einen Aktor (24, 30, 40) verstellbar ist zwischen einer dem Transportmodus entsprechenden Transportposition, in der es wenigstens teilweise vertikal unter dem Rahmen (2) angeordnet ist, um diesen zu stützen, und einer dem Arbeitsmodus entsprechenden Arbeitsposition, in der es gegenüber der Transportposition wenigstens überwiegend vertikal aufwärts sowie horizontal seitwärts verlagert ist,
**dadurch gekennzeichnet, dass**
das Aufhängungsteil (11) durch einen Verstellmechanismus (18) derart mit dem Rahmen (2) verbunden ist, dass das Fahrwerk (10) mittels einer Kombination aus einer wenigstens anteilig translatorisch erfolgenden Primärbewegung und einer rotatorisch um eine Schwenkachse (S) erfolgenden Sekundärbewegung des Aufhängungsteils (11) gegenüber dem Rahmen (2) zwischen der Transportposition und der Arbeitsposition verstellbar ist.

2. Anbaugerät nach Anspruch 1, **dadurch gekennzeichnet, dass** die Primärbewegung wenigstens anteilig translatorisch entlang einer Verschiebungsachse (V) erfolgt.

3. Anbaugerät nach einem der vorangehenden Ansprüche, **dadurch gekennzeichnet, dass** der Verstellmechanismus (18) ein Schlittenelement (20) aufweist, mit welchem das Aufhängungsteil (11) um die Schwenkachse (S) schwenkbar verbunden ist und das translatorisch verschiebbar mit dem Rahmen (2) verbunden ist.

4. Anbaugerät nach einem der vorangehenden Ansprüche, **dadurch gekennzeichnet, dass** die Verschiebungsachse (V) bezogen auf die Arbeitsposition in einem Winkel von höchstens 30°, bevorzugt höchstens 20°, weiter bevorzugt höchstens 10°, zur Horizontalen verläuft.

5. Anbaugerät nach einem der vorangehenden Ansprüche, **dadurch gekennzeichnet, dass** der Verstellmechanismus (18) dazu eingerichtet ist, die Primärbewegung und die Sekundärbewegung wenigstens überwiegend nacheinander auszuführen.

6. Anbaugerät nach einem der vorangehenden Ansprüche, **dadurch gekennzeichnet, dass** das Aufhängungsteil (11) bei Verstellen aus der Transportposition durch die Primärbewegung zu einer Heckseite (7) des Rahmens (2) hin verstellt und das Fahrwerk (10) durch die Sekundärbewegung wenigstens teilweise auf Höhe des Rahmens (2) an der Heckseite (7) am Rahmen (2) vorbeigeführt wird.

7. Anbaugerät nach einem der vorangehenden Ansprüche, **dadurch gekennzeichnet, dass** das Fahrwerk (10) in der Arbeitsposition wenigstens überwiegend vertikal zumindest auf Höhe des Rahmens (2) sowie auf einer Rückzugsseite (5) horizontal seitlich desselben angeordnet ist.

8. Anbaugerät nach einem der vorangehenden Ansprüche, **dadurch gekennzeichnet, dass** das Aufhängungsteil (11) einen Achsabschnitt (12) aufweist, an dem das wenigstens eine Laufrad (15) gelagert ist, und einen hiermit starr verbundenen Seitenabschnitt (13), der schwenkbar mit dem Schlittenelement (20) verbunden ist, wobei in der Transportposition der Rahmen (2) auf dem Achsabschnitt (12) aufliegt und sich der Seitenabschnitt (13) vom Achsabschnitt (12) aus auf der Rückzugsseite (5) seitlich des Rahmens (2) aufwärts zum Schlittenelement (20) erstreckt.

9. Anbaugerät nach einem der vorangehenden Ansprüche, **dadurch gekennzeichnet, dass** der Verstellmechanismus (18) eine Drehführung (27) aufweist, durch welche die Verschiebung des Schlittenelements (20) entlang der Verschiebungsachse (V) an eine Drehung um die Verschiebungsachse (V) zwangsgekoppelt ist, durch welche das Aufhängungsteil (11) vom Rahmen (2) fort geschwenkt wird.

10. Anbaugerät nach einem der vorangehenden Ansprüche, **dadurch gekennzeichnet, dass** die Drehführung (27) eine starr mit dem Rahmen (2) verbundene Führungsbahn (28) aufweist sowie ein entlang der Führungsbahn (28) verschiebbar geführtes Führungselement (22), welches mit dem Schlittenelement (20) zumindest drehfest bezüglich der Verschiebungsachse (V) verbunden ist.

11. Anbaugerät nach einem der vorangehenden Ansprüche, **dadurch gekennzeichnet, dass** eine parallel zur Verschiebungsachse (V) verlaufende Führungsstange (23) mit dem Rahmen (2) verbunden ist, wobei das Schlittenelement (20) einen außenseitig an der Führungsstange (23) anliegenden Hülsenabschnitt (21) aufweist, der gegenüber der Führungsstange (23) entlang der Verschiebungsachse (V) verschiebbar und um die Verschiebungsachse (V) drehbar ist.

12. Anbaugerät nach einem der vorangehenden Ansprüche, **dadurch gekennzeichnet, dass** die Primärbewegung eine Drehung des Schlittenelements (20) um die Verschiebungsachse (V) um einen Winkel zwischen 1° und 20°, bevorzugt zwischen 2° und 10°, weiter bevorzugt zwischen 3° und 7°, beinhaltet.

13. Anbaugerät nach einem der vorangehenden Ansprüche, **dadurch gekennzeichnet, dass** die Primärbewegung durch einen ersten Aktor (24) antreibbar ist und die Sekundärbewegung durch einen hiervon unabhängigen zweiten Aktor (30) antreibbar ist.

14. Anbaugerät nach einem der vorangehenden Ansprüche, **dadurch gekennzeichnet, dass** der zweite Aktor (30) als Linearaktor ausgebildet und einerseits mit dem Schlittenelement (20) sowie andererseits mit einem Umlenkhebel (33) verbunden ist, der schwenkbar mit dem Schlittenelement (20) verbunden ist und der über einen Verbindungslenker (35) mit dem Seitenabschnitt (13) verbunden ist.

15. Anbaugerät nach einem der vorangehenden Ansprüche, **dadurch gekennzeichnet, dass** dieses ein Arretierungselement (41) aufweist, das verstellbar ist zwischen einer Arretierungsposition, in der es das Fahrwerk (10) in der Transportposition arretiert, und einer Freigabeposition, in der es ein Verstellen des Fahrwerks (10) in die Arbeitsposition freigibt.
